# EUROPEAN PATENT APPLICATION

(11) **EP 4 796 307 A2**
(43) Date of publication of application: **26.08.2026**
(21) Application number: 25221821.9
(22) Date of filing: 09.12.2025
(51) Int. Cl.: B29D 30/06, B08B 7/00, B29C 37/00, B60C 5/14

(54) **SYSTEM, COMPOSITION AND METHOD FOR LASER CLEANING AN INNERLINER OF A TIRE**

(30) Priority: 18.12.2024 US 202463735690 P; 25.11.2025 US 202519399925
(71) Applicant: The Goodyear Tire & Rubber Company, Akron, OH 44316 (US)
(72) Inventor: FRANTZEN, Andreas, 54292 Trier (DE); NICULA, Adrian Florian, 2125 Luxembourg (LU); GRIFFOIN, Jean-Claude Patrice Philippe, 9170 Mertzig (LU)
(74) Representative: Kutsch, Bernd

(57) **Abstract**

A method is disclosed comprising: adding an additive (116) to a release agent (113), the additive (113) having an extinction coefficient or a maximum extinction coefficient above a predefined threshold for electro-magnetic radiation having a predefined wavelength or a predefined wavelength range; disposing the release agent (113) comprising the additive (116) between a preformed tire (109) and a curing bladder (106) of a tire curing press (100); curing the preformed tire (106) in the tire curing press (100), thereby resulting in a cured tire (111); and performing a laser cleaning of an innerliner (123) of the cured tire (111) using a laser (126) that generates a laser beam (129) at the predefined wavelength or the predefined wavelength range. Also, a composition is disclosed comprising a release agent (113) that prevents a curing bladder (106) of a tire curing press (100) from adhering to an innerliner (123) of a cured tire (111) and an additive (116) added to the release agent (113). The additive (116) has an extinction coefficient or a maximum extinction coefficient above a predefined threshold for electro-magnetic radiation having a predefined wavelength or a predefined wavelength range. The additive (116) promotes or increases ablation of the release agent (113) compared to the same composition without the additive (116) when a laser beam (129) having the predefined wavelength or having the predefined wavelength range is applied to a surface of the innerliner (123) of the cured tire (111) comprising the release agent (113).

## Description

### BACKGROUND

Tire manufacturing is a multiple step process that involves chemistry, physics, and engineering in order to meet certain tire performance characteristics. Each tire design can have a unique set of design parameters for achieving the desired performance characteristics. During the tire manufacturing process, curing is performed to give tires their final shape and tread pattern.

### SUMMARY OF THE INVENTION

The invention relates to a method in accordance with claim 1, to a system in accordance with claim 11, and to a composition in accordance with claim 7.

Dependent claims refer to preferred embodiments of the invention.

In accordance with a preferred aspect of the present invention, a method is provided that comprises adding an additive to a release agent, the additive having an extinction coefficient above a predefined threshold for electro-magnetic radiation having a predefined wavelength and disposing the release agent between a preformed tire and a curing bladder of a tire curing press. The method further comprises curing the preformed tire in the tire curing press, thereby resulting in a cured tire. The method further comprises performing a laser cleaning of an innerliner of the cured tire using a laser that generates a laser beam at the predefined wavelength.

In addition and in accordance with a preferred aspect of the present invention, a composition is provided that comprises a release agent and an additive. The release agent prevents a curing bladder of a tire curing press from adhering to an innerliner of a cured tire. The additive is added to the release agent. The additive has an extinction coefficient above a predefined threshold for electro-magnetic radiation having a predefined wavelength and the additive promotes ablation of the release agent by application of a laser beam generated at the predefined wavelength.

Still further and in accordance with a preferred aspect of the present invention, a system is provided that comprises a cured tire, a release agent, and an additive. The release agent having the additive is disposed on an innerliner of the cured tire. The additive has an extinction coefficient above a predefined threshold for electro-magnetic radiation having a predefined wavelength. The release agent is configured to prevent the innerliner of the cured tire from adhering to a curing bladder of a tire curing press. The release agent with the additive is configured to be ablated by way of a laser beam generated at the predefined wavelength.

Other systems, compositions, methods, features, and advantages of the present invention will be or become apparent to one with skill in the art upon examination of the following drawings and detailed description. It is intended that all such additional systems, methods, features, and advantages be included within this description, be within the scope of the present invention, and be protected by the accompanying claims. In addition, all optional and preferred features and modifications of the described features are usable in all portions of the invention taught herein. Furthermore, the individual features of the dependent claims, as well as all optional and preferred features and modifications of the present invention are combinable and interchangeable with one another.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 illustrates vulcanization equipment for curing automobile tires including a tire curing press having a mold apparatus and a curing bladder, according to the present invention.
FIG. 2A illustrates a perspective view of an application of a release agent to the curing bladder employed in the tire curing press and mold of FIG. 1, according to the present invention.
FIG. 2B illustrates the release agent that is applied in FIG. 2A with the additive, according to the present invention.
FIG. 3 illustrates cutaway view of a portion of a cured tire sandwiched between a mold and an inflated curing bladder of the tire curing press of FIG. 1, according to the present invention.
FIG. 4 illustrates a laser cleaning process of the innerliner of a cured tire from the tire curing press of FIG. 1, according to the present invention.
FIG. 5 is a chart depicting an extinction spectrum for an example of an additive added to a release agent, according to the present invention.
FIG. 6 is a flow chart depicting a method of curing a tire and laser cleaning process of the innerliner of the cured tire, according to the present invention.

### DETAILED DESCRIPTION OF PREFERRED EMBODIMENTS OF THE INVENTIOIN

Disclosed are various approaches for systems, compositions and methods for laser cleaning an innerliner of a cured tire. A tire is cured using a tire curing press. Once this process is complete, the innerliner, meaning the layer or layers of elastomer or other material that form the inside surface of a tubeless tire and that contain the inflating fluid within the tire, is cleaned to remove the release agent disposed on the tire during the tire curing process. A degree of ablation on the tire innerliner surface can vary for different innerliner compositions and release agent combinations. This adds process variability for tires of different compositions. By adding an additive to the release agent that has a maximum absorption at the wavelength of the cleaning laser to the release agent, the laser can specifically concentrate energy into the release agent to promote controlled ablation.

Although the following discussion provides illustrative examples of the operation of various components of the present invention, the use of the following illustrative examples does not exclude other implementations that are consistent with the principals disclosed by the following illustrative examples.

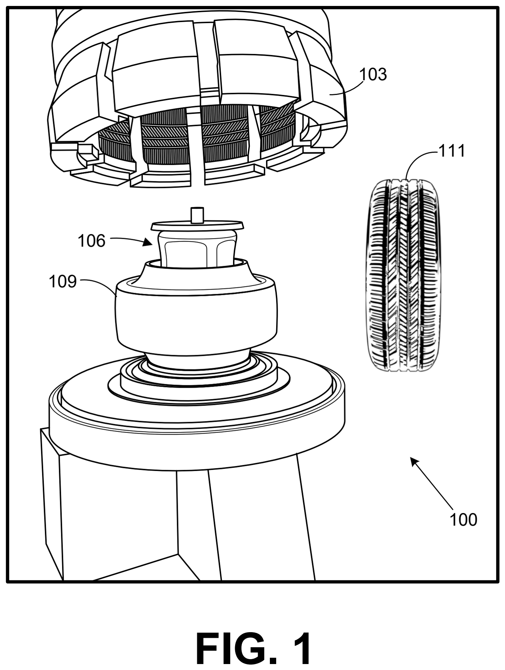

With reference to FIG. 1, shown is vulcanization equipment for curing automobile tires. FIG. 1 illustrates a tire curing press 100 that includes a mold apparatus 103, a curing bladder 106, a tire in a preformed state 109 (hereafter "preformed tire 109"), and other suitable components.

In FIG. 1, the curing bladder 106 is shown in a deflated state. After the different components of the preformed tire 109 have been assembled, one of the last steps of the tire manufacturing process involves curing a preformed tire 109 into its final shape and tread pattern. The preformed tire 109 is positioned in place on the tire curing press 100 and the mold apparatus 103 is lowered to surround the preformed tire 109. The curing bladder 106 is expanded by injecting one or more gases such as steam, nitrogen, or other gas into the curing bladder 106. The gas injected into the curing bladder 106 is heated to an appropriate curing temperature. The exterior surface of the curing bladder 106 contacts and elevates the temperature of the green rubber of the preformed tire 109 allowing the green rubber to flow into the mold and cure for a period of time. After the curing time period has expired, the mold apparatus 103 is lifted, the curing bladder 106 is deflated, and a tire in a cured state **111** (a "cured tire 111") is removed from the tire curing press 100.

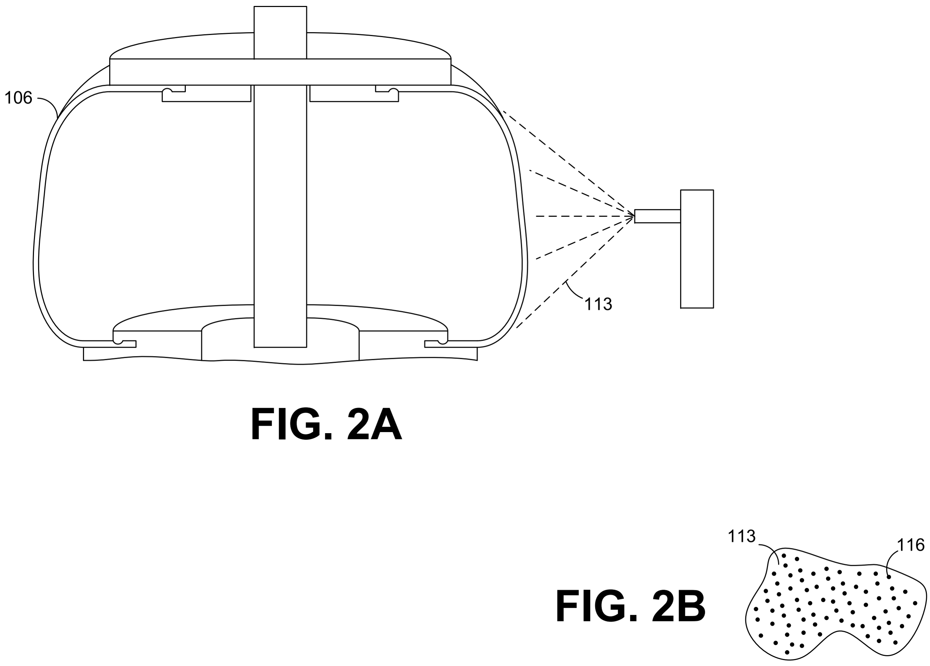

Turning to FIG. 2A, shown is a perspective view of the curing bladder 106 in the tire curing press 100 (FIG. 1). FIG. 2A illustrates the curing bladder 106 being sprayed with a release agent 113. FIG. 2B illustrates the release agent 113 with an additive 116 included therein. The release agent 113 may comprise, for example, silicon oil emulsions or any other suitable release agent composition.

The additive 116 may be, for example, a dye such as IR 26 or "Dye 26," or any other suitable composition. Alternatively, the additive 116 may comprise a composition other than a dye that includes the absorption characteristics so as to provide for enhanced removal of the release agent 113 with reduced or minimal ablation of the innerliner of the cured tire **111 as** will be described.

The release agent 113 is disposed between the preformed tire 109 and the curing bladder 106 to prevent the curing bladder 106 from sticking to the cured tire **111** after the curing process ends so that the cured tire 111 can be removed from the tire curing press 100 (FIG. 1). The additive 116 is added to the release agent 113 to promote ablation and removal of the release agent 113 during laser cleaning of the innerliner of the tire 111 as will be described.

In one approach, the release agent 113 is applied directly to the curing bladder 106. However, in another approach, the release agent may also be applied directly to the preformed tire 109. As shown in FIG. 2A, the release agent 113 may be applied by spraying. Alternatively, the release agent 113 may be applied by brushing, painting, or other means of application.

Referring next to FIG. 2B, shown is an example of a release agent 113 that includes a predefined concentration of an additive 116. The release agent 113 prevents a curing bladder 106 of a tire curing press 100 from adhering to an innerliner of a cured tire 111 (FIG. 1), where the additive 116 is added to the release agent 113. In one example, the ratio of the amount of additive 116 per unit volume of release agent 113 may be, for example, a threshold amount of the additive 116 that promotes ablation of the release agent 113 when exposed to a laser having a predefined wavelength while, at the same time, minimizing ablation of the material of the inner liner of the cured tire 111 as will be described.

In one example, the concentration of the additive 116 in the release agent 113 is specified so as to result in less than a predefined degree of ablation damage to or material removal from the innerliner of a cured tire 111 that can occur during laser cleaning as will be described.

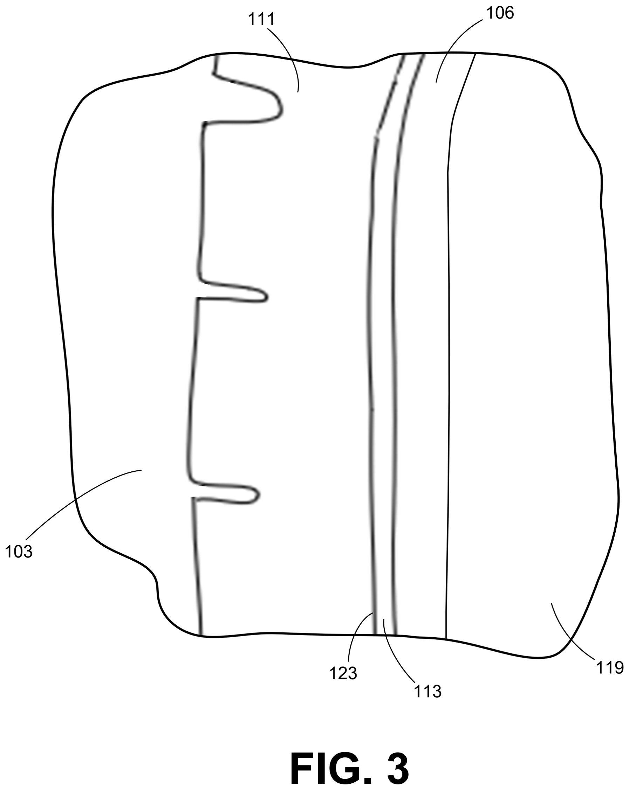

Moving on to FIG. 3, shown is a cutaway view of a portion of the cured tire 111 still within the tire curing press 100 (FIG. 1). FIG. 3 illustrates a portion of the cured tire 111 at the end of the tire curing process. Shown is a portion of the mold apparatus 103, a portion of the cured tire 111 with an innerliner 123, an amount of the release agent 113, and a portion of the curing bladder 106. As shown, when the cured tire 111 is positioned on the tire curing press 100 at or near the end of the curing cycle, the mold apparatus 103 positioned down around the cured tire 111 and the tire curing bladder 106 is in an inflated position. The curing bladder 106 is filled with a heated gas 119 such as steam, nitrogen, or other gas. The release agent 113 is disposed between the cured tire 111 and the curing bladder 106. The amount of release agent 113 disposed on a given location between the innerliner 123 and the curing bladder 106 may vary from location to location given normal process variation when applying the release agent 113 to the curing bladder 106.

As mentioned above, the release agent 113 is applied between the surface of the innerliner 123 and the curing bladder 106 to prevent the curing bladder 106 of the tire curing press 100 from adhering to the innerliner 123 of the cured tire 111 at the end of the curing cycle. This allows the cured tire 111 to be removed from the tire curing press 100 once the curing bladder 106 is deflated.

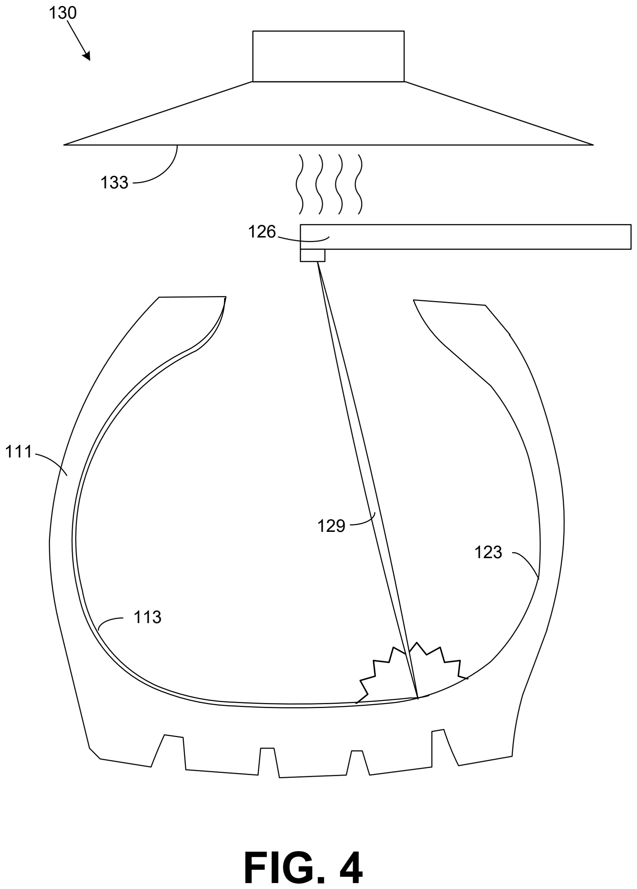

With reference to FIG. 4, shown is a laser cleaning process 130 of the innerliner 123 of the cured tire 111. FIG. 4 illustrates the cured tire 111 with an amount of release agent 113 disposed on a surface of the innerliner 123. A cleaning laser 126 generates a laser beam 129 that is directed to the surface of the innerliner 123. A vent hood 133 is positioned so as to safely capture any volatile gasses that result from the cleaning process. Once the tire curing process is complete and the cured tire 111 is removed from the tire curing press 100, there may be a residual amount of the release agent 113 disposed on the innerliner 123 of the cured tire 111.

In some tire builds, sensors, sound absorption elements, and other items may be adhered to the innerliner 123 of the cured tire 111. The release agent 113 is removed from the innerliner 123 of the cured tire 111 to provide for a clean surface of the innerliner 123 to allow items to be adhered to the innerliner 123. To accomplish the removal of any residual amount of release agent 113 disposed on a surface of the innerliner 123, the laser 126 generates a laser beam 129 at a predefined wavelength. In one example, this wavelength is 1035 nanometers or in a range of from 1000 to 1070 nanometers, although the laser beam 129 may be generated at other wavelengths. The laser beam 129 of the laser 126 scans along the innerliner 123 heating the release agent 113, resulting in an ablation of the release agent 113 with the additive 116. In addition, a portion of the innerliner 123 may be ablated as will be discussed. Any vapors that are generated from the ablation are to be captured by the vent hood 133.

Various materials are employed to build tires that provide for durability and that are environmentally friendly. In some approaches, a tire may be constructed using various materials including an amount of calcium carbonate as a main filler with only 2 parts per hundred rubber (PHR) carbon black or other materials. The various materials that are being used to manufacture tires may impact the process of cleaning the innerliner 123 of a cured tire 111. For some materials, a laser beam 129 might penetrate the innerliner 123 of the cured tire 111 at greater depths resulting in unwanted removal of varying amounts of the material of the innerliner 123 depending on the composition of the tire.

In one example, the additive 116 added to the release agent 113 has an extinction coefficient above a predefined threshold for electro-magnetic radiation at the predefined wavelength of the laser beam 129. As such, the additive 116 promotes more focused ablation of the release agent 113 by application of the laser beam 129 generated at the predefined wavelength. Specifically, the additive 116 absorbs the radiation of the laser beam 129 at the predefined wavelength, thereby heating up both the additive 116 and the release agent 113 and causing the more rapid ablation of the release agent 113 before significant damage occurs to the innerliner 123 of the cured tire 111. Thus, adding the additive 116 with an increased energy absorption rate at the wavelength of the laser beam 129 results in the release agent 113 absorbing a greater amount of the energy from the laser beam 129. This reduces or minimizes the amount of energy from the laser beam 129 that is absorbed by the materials that make up the innerliner 123 of the cured tire 111.

This adds stability and predictability to the tire cleaning process by focusing the energy density to a greater degree into the release agent 113 with the additive 116 rather than the material that makes up the innerliner 123 of the cured tire 111. With the additive 116 added to the release agent 113, the laser penetration depth into the innerliner 123 of the cured tire **111** is at less than occurs during laser cleaning of an alternative release agent that excludes the additive 116. In this respect, the laser beam 129 can cause an ablation of a surface of the innerliner 123 that removes a certain amount of the material of the innerliner 123 itself. For example, during laser cleaning, multiple passes of the laser beam 129 over a given region 134 may occur. The region 134 of the innerliner 123 that is subjected to laser cleaning may be an area where sensors or other items are mounted to the interior of the innerliner 123 by way of adhesive, vulcanization, or other approach. In this respect, the release agent 113 would act to prevent such items from being securely attached to the innerliner 123. Alternatively, the entire innerliner 123 may be subjected to laser cleaning.

To remove the release agent 113 that is disposed on a given region 134 of the innerliner 123, a laser beam 129 is directed over the region 134 in a predefined pattern such as a raster scan or other pattern. Each time the laser beam 129 traverses a given pattern, the ablation of the release agent 113 with the additive 116 and the ablation of a thin portion of the innerliner 123 may occur. In performing laser cleaning of a given region 134, the laser beam 129 may be scanned multiple times over the region 134.

In one example, the laser cleaning performed with multiple applications or passes of the laser beam 129 causes an ablation of a surface of the innerliner 123 that removes the release agent 113 with the additive 116 as well as a portion of the innerliner 123 such that a maximum of 100 micrometers of the thickness of the innerliner 123 is removed. Stated in another way, the ablation of the innerliner 123 during multiple applications or passes of the laser beam 129 results in ablation that removes a maximum of 100 micrometer of material of the innerliner 123 itself. In this respect, the damage that occurs to the innerliner 123 is minimal and does not degrade the performance of the cured tire 111.

In another example, the laser cleaning involves ablation of a surface of the innerliner 123 that removes a maximum of 60 micrometers of the innerliner 123.

It should be noted that laser cleaning may involve a single pass of the laser beam 129, or the laser cleaning may involve multiple passes of the laser beam 129 as mentioned above.

In a further example, the laser cleaning involves performing a plurality of applications or passes of the laser on the surface of the innerliner 123. In this example, individual ones of the applications or passes of the laser beam 129 cause an ablation of a surface of the innerliner 123 that removes a maximum of 20 micrometers of the innerliner 123 during each application or pass. In this respect, the amount of the material of the innerliner 123 that is removed during laser cleaning may be controlled by performing a predefined number of applications or passes of the laser beam 129.

In this manner, the maximum amount of the innerliner 123 that is removed may be determined at increments at up to 20 microns for each application or pass of the laser beam 129. For example, the maximum amount of the material of the innerliner 123 that is removed may be 20, 40, 60, 80, or 100 micrometers given a corresponding number of 1, 2, 3, 4, or 5 applications or passes of the laser beam 129, respectively.

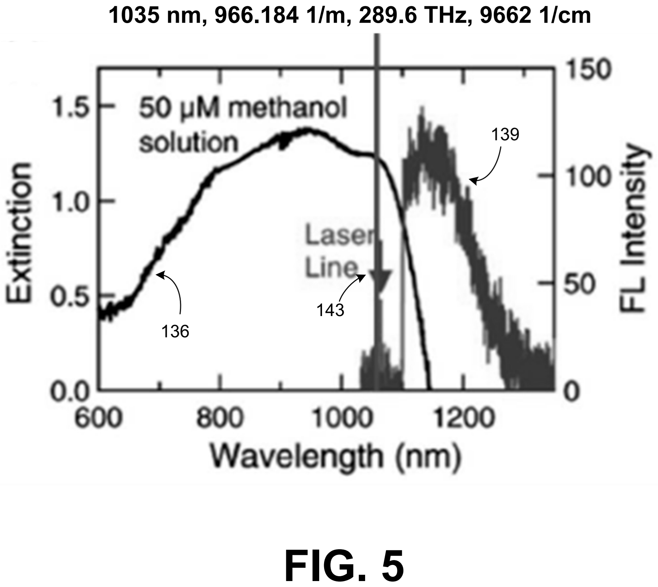

Turning next to FIG. 5, shown is a chart 135 that illustrates the extinction spectrum 136 and the fluorescence intensity 139 of one example of an additive 116 (FIG. 2B) comprising 50 µM IR26 methanol solution in which the IR26 molecules are dispersed and dried on a silicon wafer. The laser line 143 indicates the excitation laser line at approximately 1035 nanometers. The extinction spectrum 136 depicts the extinction coefficient as a function of the wavelength of electromagnetic radiation in nanometers. The fluorescence spectrum 139 depicts the fluorescence intensity as a function of the wavelength of electromagnetic radiation in nanometers. This is one example of an additive 116 (FIG. 2) comprising a dye with relatively high absorption for the laser wavelength at 1035 nm.

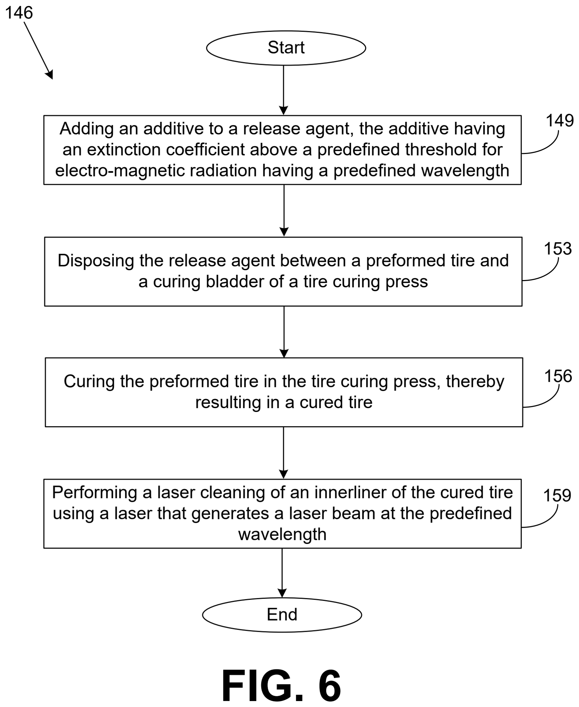

Referring next to FIG. 6, shown is a flowchart of one example method 146 according to the present invention. The method 146 depicted in FIG. 6 provides one or more advantages or benefits including improving ablation of the release agent 113 when performing laser cleaning of the innerliner 123 (FIG. 4) of a cured tire **111** (FIG. 4). Specifically, the method 146 and other procedures and structures described herein add an additive 116 to the release agent 113 to promote ablation of the release agent 113 during the laser cleaning process 130.

Beginning with step 149, the method 146 begins by adding an additive 116 to a release agent 113, the additive 116 having an extinction coefficient above a predefined threshold for electro-magnetic radiation having a predefined wavelength such as, for example, 1035 nanometers or other wavelength. Thereafter, step 153 involves disposing the release agent 113 between a preformed tire 109 and a curing bladder 106 of a tire curing press 100.

Then, in step 156, the method 146 further comprises curing the preformed tire 109 in the tire curing press 100, thereby resulting in a cured tire 111. Next, in step 159, the method 146 includes performing a laser cleaning of an innerliner 123 of the cured tire **111** using a laser 126 that generates a laser beam 129 at the predefined wavelength. Thereafter, the process ends as shown.

In addition to the foregoing, the various approaches of the present invention include, but are not limited to, the approaches set forth in the following clauses.

Clause 1 is a method comprising adding an additive to a release agent, the additive having an extinction coefficient above a predefined threshold for electro-magnetic radiation having a predefined wavelength; disposing the release agent between a preformed tire and a curing bladder of a tire curing press; curing the preformed tire in the tire curing press, thereby resulting in a cured tire; and performing a laser cleaning of an innerliner of the cured tire using a laser that generates a laser beam at the predefined wavelength.

Clause 2 is a method as set forth in clause 1, wherein the laser generates the laser beam at the predefined wavelength of 1035 nanometer.

Clause 3 is a method as set forth in any one of clauses 1 or 2, wherein the performing of the laser cleaning further comprising heating the release agent by applying the laser beam to the release agent on a surface of the innerliner of the cured tire, resulting in an ablation of the release agent with the additive.

Clause 4 is a method as set forth in any one of clauses 1-3, wherein the laser cleaning further comprising causing an ablation of a surface of the innerliner that removes a maximum of 100 microns of the innerliner.

Clause 5 is a method as set forth in any one of clauses 1-3, wherein the laser cleaning further comprising causing an ablation of a surface of the innerliner that removes a maximum of 60 microns of the innerliner.

Clause 6 is a method as set forth in any one of clauses 1-3, wherein the laser cleaning further comprises performing a plurality of applications of the laser on the surface of the innerliner, where individual ones of the applications of the laser cause an ablation of a surface of the innerliner that removes a maximum of 20 microns of the innerliner.

Clause 7 is a method as set forth in any one of clauses 1-6, wherein the release agent comprises a silicon oil emulsion.

Clause 8 is a composition or system, comprising a release agent that prevents a curing bladder of a tire curing press from adhering to an innerliner of a cured tire; an additive added to the release agent, wherein the additive has an extinction coefficient above a predefined threshold for electro-magnetic radiation having a predefined wavelength; and the additive promotes ablation of the release agent by application of a laser beam generated at the predefined wavelength.

Clause 9 is a composition or system as set forth in clause 8, wherein the predefined wavelength is approximately 1035 nanometers.

Clause 10 is a composition or system as set forth in any one of clauses 8 or 9, wherein the additive promotes the ablation such that a penetration depth of the laser beam into the innerliner of the cured tire is less than occurs during an ablation of an alternative release agent that excludes the additive.

Clause 11 is a composition or system as set forth in any one of clauses 8-10, wherein the release agent comprises a silicon oil emulsion.

Clause 12 is a composition or system as set forth in any one of clauses 8-11, wherein the additive further comprises a dye.

Clause 13 is a system comprising a cured tire; a release agent having an additive is disposed on an innerliner of the cured tire, the additive having an extinction coefficient above a predefined threshold for electro-magnetic radiation having a predefined wavelength; the release agent being configured to prevent the innerliner of the cured tire from adhering to a curing bladder of a tire curing press; and wherein the release agent with the additive is configured to be ablated by way of a laser beam generated at the predefined wavelength.

Clause 14 is a system as set forth in clause 13, wherein the release agent further comprises a silicon oil emulsion.

Clause 15 is a system as set forth in any one of clauses 13 or 14, wherein the additive further comprises a dye.

Clause 16 is a system as set forth in any one of clauses 13-15, wherein a penetration depth of the laser beam into the innerliner of the cured tire is less than occurs during an ablation of an alternative release agent that excludes the additive.

Clause 17 is a system as set forth in any one of clauses 13-16, further comprising a region of the innerliner where wherein a maximum of 100 microns of the innerliner is removed by virtue of an ablation of the surface of the innerliner due to the laser beam.

Clause 18 is a system as set forth in any one of clauses 13-16, further comprising a region of the innerliner where wherein a maximum of 60 microns of the innerliner is removed by virtue of an ablation of the surface of the innerliner due to the laser beam.

Clause 19 is a system as set forth in any one of clauses 13-18, wherein a material of the cured tire includes an amount of calcium carbonate as a main filler.

## Claims

1. A method comprising:
adding an additive (116) to a release agent (113), the additive (113) having an extinction coefficient or a maximum extinction coefficient above a predefined threshold for electro-magnetic radiation having a predefined wavelength or a predefined wavelength range;
disposing the release agent (113) comprising the additive (116) between a preformed tire (109) and a curing bladder (106) of a tire curing press (100);
curing the preformed tire (106) in the tire curing press (100), thereby resulting in a cured tire (111); and
performing a laser cleaning of an innerliner (123) of the cured tire (111) using a laser (126) that generates a laser beam (129) at the predefined wavelength or the predefined wavelength range.

2. The method of claim 1, wherein the laser (126) generates the laser beam (129) at the predefined wavelength of 1035 nanometer or in a range of from 1000 to 1070 nanometer or from 1020 to 1045 nanometer.

3. The method of claim 1 or 3, wherein the performing of the laser cleaning further comprising heating the release agent (113) by applying the laser beam (129) to the release agent (113) on a surface of the innerliner (123) of the cured tire (111), resulting in an ablation of the release agent (113) with the additive (116).

4. The method of at least one of the previous claims, wherein the laser cleaning causes an ablation of a surface of the innerliner (111) that removes a maximum of 100 micrometers or a maximum of 60 micrometers of the thickness of the innerliner (123),

5. The method of at least one of the previous claims, wherein the laser cleaning further comprises performing a plurality of applications of the laser beam (129) on the surface of the innerliner (123), where individual ones of the applications of the laser beam (129) cause an ablation of a surface of the innerliner (123) that removes a maximum of 20 micrometers of the thickness of the innerliner (123).

6. The method of at least one of the previous claims, wherein the release agent (113) comprises a silicon oil emulsion.

7. A composition comprising:
a release agent (113) that prevents a curing bladder (106) of a tire curing press (100) from adhering to an innerliner (123) of a cured tire (111);
an additive (116) added to the release agent (113);
wherein the additive (116) has an extinction coefficient or a maximum extinction coefficient above a predefined threshold for electro-magnetic radiation having a predefined wavelength or a predefined wavelength range, and
wherein the additive (116) promotes or increases ablation of the release agent (113) compared to the same composition without the additive (116) when a laser beam (129) having the predefined wavelength or having the predefined wavelength range is applied to a surface of the innerliner (123) of the cured tire (111) comprising the release agent (113).

8. The composition of claim 7, wherein the predefined wavelength or wavelength range is 1035 nanometers or from 1000 to 1070 nanometers or from 1020 to 1045 nanometers.

9. The composition of claim 7 or 8, wherein the additive (116) promotes or increases the ablation such that a penetration depth of the laser beam (129) into the innerliner (123) of the cured tire (111) is less than occurs during an ablation of a respective release agent (113) that excludes the additive (116).

10. The system of at least one of the claims 7 to 9, wherein the release agent (113) comprises a silicon oil emulsion and/or wherein the additive (116) is or comprises a dye.

11. A system comprising:
a cured tire (111);
a release agent (113) comprising an additive (116) is disposed on an innerliner (123) of the cured tire **(111),** the additive (116) having an extinction coefficient or a maximum extinction coefficient above a predefined threshold for electro-magnetic radiation having a predefined wavelength or a predefined wavelength range;
wherein the release agent (113) is configured to prevent the innerliner (123) of the cured tire (111) from adhering to a curing bladder (106) of a tire curing press (100); and
wherein the release agent (113) with the additive (116) is configured to be ablated by way of a laser beam (129) generated at the predefined wavelength or the predefined wavelength range.

12. The system of claim **11,** wherein the release agent (113) comprises a silicon oil emulsion and/or wherein the additive (116) is or comprises a dye.

13. The system of claim 11 or 12, wherein a penetration depth of the laser beam (129) into the innerliner (123) of the cured tire (111) is less than occurs during an ablation of a respective release agent (113) that excludes the additive (116).

14. The system of at least one of the claims 11 to 13, comprising a region of the innerliner (123) where a maximum of 100 micrometers or a maximum of 60 micormeters of the thickness of the innerliner (123) is removed by virtue of an ablation of the surface of the innerliner (123) due to the laser beam (129).

15. The system of at least one of the claims 11 to 14, wherein a material of the cured tire (111), preferably the innerliner (123), includes an amount of calcium carbonate as a main filler.
